(19) Europäisches Patentamt

European Patent Office

Office européen des brevets

(11) Veröffentlichungsnummer: **0 300 222 B1**

(12) # EUROPÄISCHE PATENTSCHRIFT

(45) Veröffentlichungstag der Patentschrift: **12.08.92**

(51) Int. Cl.⁵: **F17C 5/06,** //F02B43/00

(21) Anmeldenummer: **88110055.6**

(22) Anmeldetag: **24.06.88**

(54) Einrichtung zum Betanken eines Gasbrennstoffbehälters.

(30) Priorität: **23.07.87 CH 2810/87**
**17.02.88 CH 582/88**

(43) Veröffentlichungstag der Anmeldung:
**25.01.89 Patentblatt 89/04**

(45) Bekanntmachung des Hinweises auf die
Patenterteilung:
**12.08.92 Patentblatt 92/33**

(84) Benannte Vertragsstaaten:
**CH DE FR GB IT LI NL**

(56) Entgegenhaltungen:
**US-A- 3 837 377**
**US-A- 4 531 558**

**SOVIET INVENTIONS ILLUSTRATED, Woche
J50, 2. Februar 1983, Sektion "Mechanical",
Nr. B1909J/50, Derwent Publications Ltd,
London, GB**

(73) Patentinhaber: **GEBRÜDER SULZER AKTIENGE-
SELLSCHAFT**
**Zürcherstrasse 9**
**CH-8401 Winterthur(CH)**

(72) Erfinder: **Baumann, Heinz**
**Bürglistrasse 49**
**CH-8400 Winterthur(CH)**
Erfinder: **Mutter, Heinz**
**Anton-Graff-Strasse 40**
**CH-8400 Winterthur(CH)**
Erfinder: **Schreiber, Kurt**
**Hasenrain 8**
**CH-8305 Dietlikon(CH)**
Erfinder: **Thürig, Peter**
**Bolsterstrasse 32**
**CH-8383 Kollbrunn(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Einrichtung zum Betanken eines Gasbrennstoffbehälters, mit einem zum Verdichten des Gasbrennstoffs bestimmten Kompressor, welcher saugseitig über eine mit einem absperrbaren Einlassventil versehene Saugleitung an eine Quelle des Gasbrennstoffs, insbesondere eine Erdgasleitung, anschliessbar und druckseitig über eine Speiseleitung, die mit einem auf einen vorbestimmten Hochstdruck des verdichteten Gasbrennstoffs einstellbaren Druckbegrenzungsventil und mit einem Entlastungsventil versehen ist, an den zu betankenden Gasbrennstoffbehälter anschliessbar sind.

Bei einer aus der US-A-4 531 558 bekannten Einrichtung der genannten Art sind der Kompressor und alle Armaturen der Einrichtung in einem mit Durchtrittsöffnungen versehenen, gegen die Umgebung offenen Gehäuse angeordnet. Dabei wird der zum Betanken des Fahrzeuges bestimmte Gasbrennstoff, z.B. Erdgas, auf einen Druck von ca. 34,5 bar verdichtet und - vorzugsweise über eine Speichereinrichtung, in welcher eine bestimmte Menge des verdichteten Gasbrennstoffs absorbiert werden kann, - dem Gasbrennstoffbehälter mit einem maximalen Fülldruck von ca. 13,8 bis 27,6 bar zugeführt. Um bei einem auf diese Weise, mit relativ geringem Fülldruck, zu betankenden Fahrzeug eine ausreichend grosse Reichweite zwischen zwei Betankungen zu gewährleisten, ist ein relativ grosses Speichervolumen erforderlich, welches einen entsprechend grossen Einbauraum am Fahrzeug beansprucht.

Bei einer anderen bekannten Einrichtung der eingangs genannten Art, welche, im Vergleich zur vorstehend beschriebenen Einrichtung, ein wesentlich geringeres Speichervolumen am Fahrzeug erfordert, wird der mit einem Druck von z.B. 10 mbar angelieferte Gasbrennstoff beim Betanken des Gasbehälters auf einen Fülldruck von z.B. 200 bar verdichtet. Dazu wäre die vorstehend beschriebene Einrichtung, insbesondere aus Sicherheitsgründen, nicht geeignet. Bei derartigen, für hohe Drücke ausgelegten Ausführungen besteht das Problem, dass insbesondere in Gegenden bzw. unter Betriebsverhältnissen mit grösseren Schwankungen der Umgebungstemperatur entsprechend grosse Schwankungen des im gefüllten Gasbrennstoffbehälter herrschenden Drucks auftreten. Beispielsweise würde eine bei einer Umgebungstemperatur von -20° C mit einem Fülldruck von 200 bar in den Gasbrennstoffbehälter eines Fahrzeuges eingebrachte Gasfüllung beim Parken des Fahrzeuges in einem Raum mit einer Temperatur von z.B. +20° einen Druck von ca. 300 bar aufweisen. Entsprechend muss der Fülldruck an die jeweiligen Temperaturverhältnisse angepasst, d.h. bei tiefen Umgebungstemperaturen entsprechend reduziert werden. Dazu sind bisher relativ aufwendige, fachmännisch sorgfältig zu bedienende Anlagen erforderlich, um beim Umgang mit dem explosionsgefährlichen Gasbrennstoff die nötige Betriebssicherheit sowohl der Betankungsanlage als auch des zu betankenden Brennstoffbehälters zu gewährleisten.

Der Erfindung liegt die Aufgabe zugrunde, eine insbesondere in dieser Hinsicht verbesserte, einfach zu bedienende Betankungseinrichtung zu schaffen, welche eine selbsttätige Anpassung des Fülldrucks des Gasbrennstoffs an die jeweilige Umgebungstemperatur gestattet und welche zugleich eine erhöhte Betriebssicherheit der Anlage gewährleistet.

Diese Aufgabe wird gemäss der Erfindung dadurch gelöst, dass das Entlastungsventil und das Einlassventil an mindestens eine in Abhängigkeit von Steuersignalen eines die Umgebungstemperatur am Aufstellungsort der Einrichtung erfassenden Temperaturfühlers und eines den Speisedruck des Kompressors erfassenden Druckfühlers beeinflussbare Steuereinrichtung angeschlossen sind, dass ferner zumindest das Druckbegrenzungsventil und das Entlastungsventil mit der Steuereinrichtung in einem gegen die unmittelbare Umgebung abgedichteten Gehäuse angeordnet sind, weiches an eine aus dem Anordnungsbereich der Einrichtung wegführende Abströmleitung angeschlossen ist, und dass der mit der Quelle des Gasbrennstoffs verbindbare Abschnitt der Saugleitung mit einem die Differenz zwischen dem in diesem Abschnitt herrschenden Druck des Gasbrennstoffs und dem im Gehäuse herrschenden Druck erfassenden Druckdifferenzfühler versehen ist, der an die Steuereinrichtung angeschlossen ist.

Bei der erfindungsgemäss ausgebildeten Einrichtung wird eine von willkürlichen Eingriffen weitgehend unabhängige Einstellung der in der Saugleitung und in der Speiseleitung herrschenden Gasdrücke auf vorbestimmte, den jeweiligen Betriebsbindungen entsprechende Werte erzielt, wodurch insbesondere Fehlmanipulationen der Anlage verhindert werden und damit eine z.B. durch Ueberfüllen des Behälters oder durch unkontrollierten Gasaustritt verursachte Explosionsgefahr vermieden wird.

Ausgestaltungen des Erfindungsgegenstandes sind in den abhängigen Patentansprüchen angegeben.

Weitere Einzelheiten und Merkmale ergeben sich aus der folgenden Beschreibung von in der Zeichnung schematisch dargestellten Ausführungsbeispielen der Erfindung in Verbindung mit den Ansprüchen. In der Zeichnung zeigen:

Fig. 1    ein Schema einer erfindungsgemäss ausgebildeten Betankungseinrichtung,

Fig. 2    ein Aggregat einer entsprechenden Betankungseinrichtung in einer abgewandelten Ausführungsform,

Fig. 3    ein Aggregat einer weiteren Betankungseinrichtung in einer abgewandelten Ausführungsform,

Fig. 4    ein Aggregat der Betankungseinrichtung nach Fig. 1 in einem Teillängsschnitt,

Fig. 5    das Aggregat in einem Querschnitt
entsprechend der Linie V-V in Fig. 4,

Fig. 6    das Aggregat in einem Querschnitt
entsprechend der Linie VI-VI in Fig. 4,
und

Fig. 7    ein Schema einer weiteren Betankungseinrichtung in einer abgewandelten Ausführungsform.

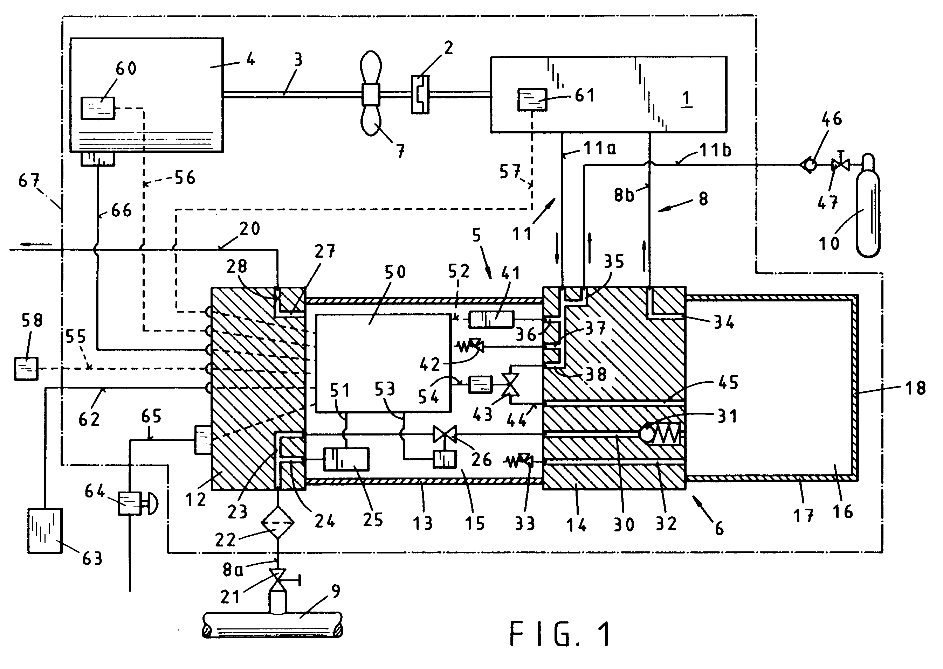

Die Einrichtung nach Fig. 1 enthält einen Kompressor 1, der über eine Kupplung 2 mit einer
Antriebswelle 3 eines Motors 4 gekuppelt ist, und
ein mit dem Kompressor 1 verbundenes Sicherheitsaggregat 5, das in einem druckfesten Gehäuse
6 angeordnet ist. Die Antriebswelle 3 kann mit
einem Ventilatorrad 7 zur Kühlung des Kompressors versehen sein, Der Kompressor 1, der in beliebiger Bauart, z.B. als mehrstufiger Kolbenkompressor, ausgeführt sein kann, ist saugseitig über
eine Saugleitung 8 an eine Quelle eines Gasbrennstoffs, beim dargestellten Beispiel an eine Erdgasleitung 9, anschliessbar. Die Druckseite des Kompressors 1, die bei einem mehrstufigen Kompressor der letzten Stufe entspricht, ist über eine Speiseleitung 11 an einen zu betankenden Gasbrennstoffbehälter 10 anschliessbar, der als Treibstofftank eines nicht dargestellten Fahrzugs ausgebildet
sein kann.

Das Gehäuse 6 enthält einen durch eine erste
Stirnwand 12 eine zylindrische Seitenwand 13 und
eine Zwischenwand 14 begrenzten Armaturenraum
15 und einen von diesem getrennten Pufferraum
16, der durch die Zwischenwand 14, eine zylindrische Seitenwand 17 und eine zweite Stirnwand 18
begrenzt ist. Die erste Stirnwand 12 und die Zwischenwand 14 sind als Verteilblöcke ausgebildet.
Die Stirnwand 12 ist an ihrem Umfang mit Anschlussstellen für einen mit der Erdgasleitung 9
verbindbaren ersten Abschnitt 8a der Saugleitung 8
und für eine Abströmleitung 20 versehen, während
die Zwischenwand 14 an ihrem Umfang eine Anschlussstelle für einen zum Kompressor führenden
zweiten Abschnitt 8b der Saugleitung 8 und zwei
Anschlussstellen für einen mit dem Kompressor 1
verbundenen ersten Abschnitt 11a und einen mit
dem Gasbrennstoffbehälter 10 verbindbaren zweiten Abschnitt 11b der Speiseleitung 11 enthält.

Der erste Abschnitt 8a der Saugleitung 8, der
an die Erdgasleitung 9 direkt oder, wie in Fig. 1
angedeutet, über ein z.B. von Hand betätigbares
Absperrorgan 21 angeschlossen werden kann, ist mit einem Filter 22 zum Abscheiden von im Erdgas
gegebenenfalls enthaltenen Verunreinigungen versehen und ist an zwei in der Stirnwand 12 ausgebildete Strömungskanäle 23 und 24 angeschlossen, welche je mit der Eintrittsseite eines im Armaturenraum 15 angeordneten absperrbaren Einlassventils 26 bzw. mit einem im Armaturenraum 15
angeordneten Druckdifferenzfühler 25 verbunden
sind. Die Abströmleitung 20 ist über einen in der
Stirnwand 12 angeordneten Strömungskanal 27,
der eine Drosselstelle 28 enthält, mit dem Armarenraum 15 verbunden und ist aus der unmittelbaren Umgebung der Betankungseinrichtung weggeführt, z.B. über eine die Einrichtung überdeckendes, nicht dargestelltes Dach hinausführt. Die Austrittsseite des Einlassventils 26 ist an einen in der
Zwischenwand 14 ausgebildeten Strömungskanal
30 angeschlossen, der über ein Rückschlagventil
31 mit dem Pufferraum 16 verbunden ist. Der Pufferraum 16 ist über einen in der Zwischenwand 14
ausgebildeten Strömungskanal 32 mit einem im
Armaturenraum 15 angeordneten, in diesen mündenden Sicherheitsventil 33 verbunden, welches
auf einen vorbestimmten Höchstwert eines im Pufferraum 16 herrschenden Drucks einstellbar ist. Der
Pufferraum 16 ist ferner über einen weiteren Strömungskanal 34 mit dem zum Kompressor 1 führenden zweiten Abschnitt 8b der Saugleitung 8 verbunden.

Die beiden Abschnitte 11a und 11b der Speiseleitung 11 sind über in der Zwischenwand 14 ausgebildete Strömungskanäle 35, 36, 37 und 38 miteinander und mit einer im Armaturenraum 15 angeordneten Armaturengruppe verbunden. Diese Armaturengruppe enthält einen Druckfühler 41, ein in
den Armaturenraum 15 mündendes, auf einen vorbestimmten Höchstdruck des verdichteten Gasbrennstoffs einstellbares Druckbegrenzungsventil
42 und ein absperrbares Entlastungsventil 43, dessen Austrittseite über eine Entlastungsleitung 44
und einen in der Zwischenwand 14 ausgebildeten
Strömungskanal 45 mit dem Pufferraum 16 in Verbindung steht. Der zweite Abschnitt 11b der Speiseleitung 11 ist mit dem Gasbrennstoffbehälter 10
über an diesem angeordnete Absperrmittel verbindbar, die entsprechend der Darstellung nach
Fig. 1 unter anderem ein Rückschlagventil 46 und
ein z.B. von Hand betätigbares Absperrventil 47
enthalten können.

Im Armaturenraum 15 ist ferner eine elektronische Steuereinrichtung 50 angeordnet, die über
Signalleitungen 51 und 52 je mit dem Druckdifferenzfühler 25 bzw. dem Hochdruckfühler 41 sowie
über Steuerleitungen 53 und 54 je mit einem Stellglied, z.B. einem Stellmotor oder einem Elektromagneten, des Einlassventils 26 bzw. des Entlastungsventils 43 verbunden ist. Die Steuereinrichtung 50 ist ferner über durch die Stirnwand 12 des Gehäuses 6 hindurchgeführte Signalleitungen 55, 56 und 57 je mit einem Temperaturfühler 58 bzw. 60 bzw. 61 sowie über eine Steuerleitung 62 mit einer Schalteinrichtung 63 verbunden und über eine mit einem Notschalter 64 versehene Stromleitung 65 an eine nicht dargestellte elektrische Stromquelle anschliessbar. Ueber eine weitere Stromleitung 66 ist der Motor 4 an die Steuereinrichtung 50 angeschlossen. Der Temperaturfühler 58 ist im Abstand von der Betankungseinrichtung, vorzugsweise ausserhalb eines in der Fig. 1 mit strichpunktierten Linien angedeuteten Gehäuses 67 angeordnet, welches den Kompressor 1, den Motor 4 und das Sicherheitsaggregat 5 umgeben kann. Der Temperaturfühler 58 erfasst die am Aufstellungsort der Betankungseinrichtung herrschende Umgebungstemperatur, während die Temperaturfühler 60 und 61 je am Motor 4 bzw. am Kompressor 1 angeordnet sind.

Die Betankungseinrichtung wird über die z.B. durch einen Schlüssel betätigbare Schalteinrichtung 63 in Betrieb gesetzt, wobei über in der Steuereinrichtung 50 enthaltene, nicht weiter dargestellte Schalteinheiten das Entlastungsventil 43 der Speiseleitung 11 über die Steuerleitung 54 geschlossen, das Einlassventil 26 der Saugleitung 8 über die Steuerleitung 51 geöffnet und der Motor 40 über die Stromleitung 66 eingeschaltet wird. Bei geöffnetem Absperrorgan 21 wird das aus der Erdgasleitung 9 mit einem Druck von z.B. 10 mbar zugeführte Erdgas durch das Rückschlagventil 31 in den Pufferraum 16 und über den Abschnitt 8b der Speiseleitung 8 dem Kompressor 1 zugeführt, auf einen vorbestimmten Speisedruck verdichtet und über die Speiseleitung 11 dem Gasbrennstoffbehälter 10 zugeführt. Der Speisedruck ist durch das Druckbegrenzungsventil 42 auf einen Höchstwert von z.B. 230 bar begrenzt. Durch die Steuereinrichtung 50 wird der betriebsmässige Speisedruck in Abhängigkeit von Steuersignalen des die Umgebungstemperatur erfassenden Temperaturfühlers 58 und des Druckfühlers 41 der Speiseleitung 11 auf einen der jeweiligen Umgebungstemperatur entsprechenden Wert begrenzt, der bei einer Umgebungstemperatur von -40° C z.B. 100 bar und bei einer umgebungstemperatur von +20° C z.B. 200 bar betragen kann, mit entsprechenden, dem jeweils vorgegebenen Temperaturbereich zugeordneten End- und Zwischenwerten.

Entsprechend der in die Steuereinrichtung 50 eingegebenen Temperatur/Druck-Funktion wird beim Erreichen des der Umgebungstemperatur entsprechenden betriebsmässigen Speisedrucks - z.B. 150 bar - über die durch die entsprechenden Signale des Druckfühlers 41 und des Temperaturfühlers 58 beeinflusste Steuereinrichtung 50 das Einlassventil 26 der Saugleitung 8 geschlossen, das Entlastungsventil 43 der Speiseleitung 11 geöffnet und der Motor 4 abgeschaltet. Ueber das geöffnete Entlastungsventil 43 strömt die im Kompressor 1 und in der durch das Rückschlagventil 46 verschlossenen Speiseleitung 11 verbliebene, verdichtete Gasbrennstoffmenge durch den Strömungskanal 45 in den Pufferraum 16, in dem ein durch das Sicherheitsventil 33 begrenzter Druck von z.B. 2 - 3 bar aufgebaut wird. Beim Ueberschreiten dieses Drucks wird eine entsprechende menge des Gasbrennstoffs durch den Strömungskanal 32 und das Sicherheitsventil 33 in den Armaturenraum 15 geführt und aus diesem, durch die Drosselstelle 28 entsprechend verzögert, über die Abströmleitung 20 an eine von der Betankungsanlage entfernte Stelle abgeführt und ins Freie abgeleitet.

In entsprechender Weise wird auch bei einem Ueberschreiten des am Druckbegrenzungsventil 42 eingestellten Höchstwertes des Speisedrucks die durch das Druckbegrenzungsventil 42 in den Armaturenraum 15 austretende Gasmenge über die Abströmleitung 20 abgeführt.

Die Betankungseinrichtung kann auch vor Erreichen des der Umgebungstemperatur entsprechenden Speisedrucks über die Steuereinrichtung 50 selbsttätig abgestellt werden. Wenn der Druck in der Speiseleitung 11 nach dem Einschalten des Kompressors 1 nicht ansteigt oder bei eingeschaltetem Kompressor 1 unter einen vorbestimmten Wert abfällt, kann in Abhängigkeit von einem entsprechenden Signal des Druckfühlers 41 in der Steuereinrichtung 50 jeweils ein Signal zum Schliessen des Einlassventils 26, zum Oeffnen des Entlastungsventils 43 und zum Abschalten des Motors 4 ausgelöst werden. Entsprechende Abstellsignale können jeweils bei einem durch Ansprechen des Druckbegrenzungsventils 42 verursachten Druckanstieg im Gehäuse 15 sowie bei einem zu geringen Eingangsdruck des Gasbrennstoffs im Abschnitt 8a der Saugleitung 8 durch den Druckdifferenzfühler 25 ausgelöst werden. Weitere Abstellsignale können jeweils beim Ueberschreiten einer vorbestimmten Temperatur in einem Messbereich des Motors 4 und/oder des Kompressors 1 durch den entsprechenden Temperaturfühler 60 bzw. 61 auf die Steuereinrichtung übertragen werden. Es versteht sich, dass die Betankungseinrichtung auch durch die Schalteinrichtung 63 bzw. den Notschalter 64 vorzeitig abgeschaltet werden kann.

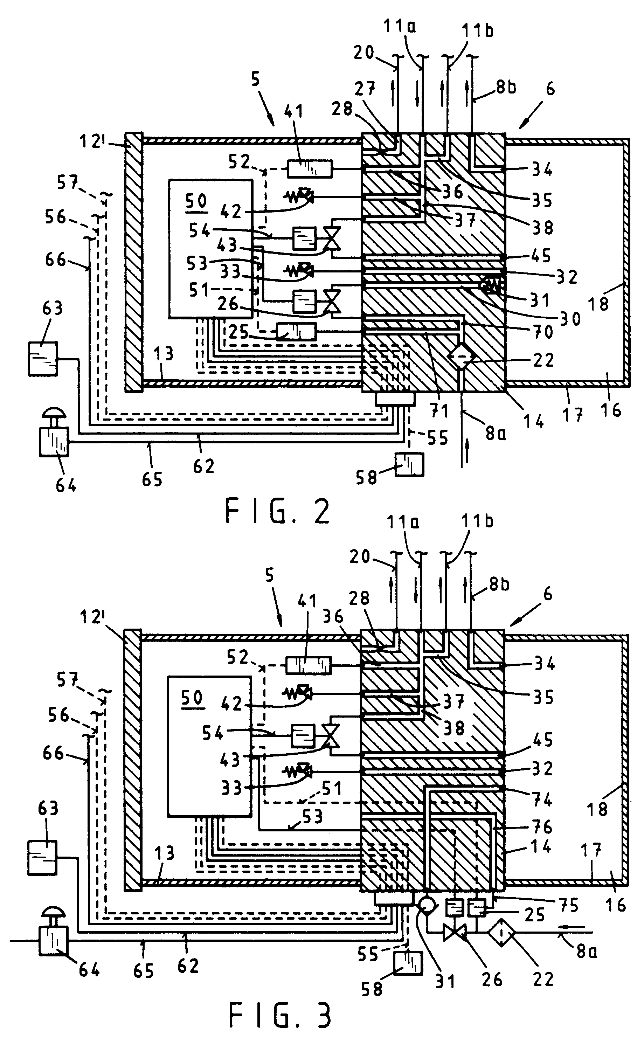

Beim Ausführungsbeispiel nach Fig. 2 sind die Eintrittsseite des Einlassventils 26 und der Druckdifferenzfühler 25 je an einen in der Zwischenwand 14 ausgebildeten Strömungskanal 70 bzw. 71 angeschlossen. Der Strömungskanal 71 ist mit dem Strömungskanal 70 verbunden, der über den in der Zwischenwand 14 angeordneten Filter 22 mit dem am Umfang der Zwischenwand 14 angeschlossenen Abschnitt 8a der Saugleitung 8 verbunden ist.

Bei dieser Aufführung sind die zu den Temperaturfühlern 58, 60, 61 führenden Signalleitungen 55, 56, 57, die Steuerleitung 62 und die Stromleitung 65 durch die Zwischenwand 14 in den Armaturenraum 15 geführt, welcher durch eine Stirnwand 12′ begrenzt ist, die keine Strömungskanäle und Leitungsdurchführungen aufweist und daher entsprechend dünn ausgeführt sein kann.

Bei den Ausführungen nach den Fig. 1 und 2 sind alle für die Steuerung der Betankungseinrichtung wesentlichen, vom Gasbrennstoff durchströmten Armaturen mit den zugehörigen Verbindungs- und Schaltstellen in dem druckfesten Gehäuse 15 angeordnet, welches nur wenige, relativ leicht abzudichtende Aussenanschlüsse aufweist und welches damit eine einfache konstruktive Lösung darstellt und eine sichere Unterbringung der, z.B. bei defekten Dichtungen, explosionsgefährdeten Teile der Betankungseinrichtung gewährleistet.

Entsprechend der Darstellung nach Fig. 3 ist auch eine Ausführung möglich, bei der nur die den höchsten Drücken ausgesetzten Armaturen im Armaturenraum 15 angeordnet sind, während die jeweils einem geringen Druck z.B. 2 - 3 bar -des Gasbrennstoffs ausgesetzten Armaturen - der Druckdifferenzfühler 25, das Einlassventil 26 und das Rückschlagventil 31 - ausserhalb des Gehäuses 5 angeordnet und am Umfang der Zwischenwand 14 an einen Strömungskanal 74 angeschlossen sind, der direkt in den Pufferraum 16 führt. Vom Druckdifferenzfühler 25 kann eine den Druck im Armaturenraum 15 erfassende Sensorleitung 75 in den Armaturenraum 15 oder, entsprechend der Darstellung nach Fig. 3, in einen mit diesem verbundenen, in der Zwischenwand 14 ausgebildeten, Strömungskanal 75 geführt sein.

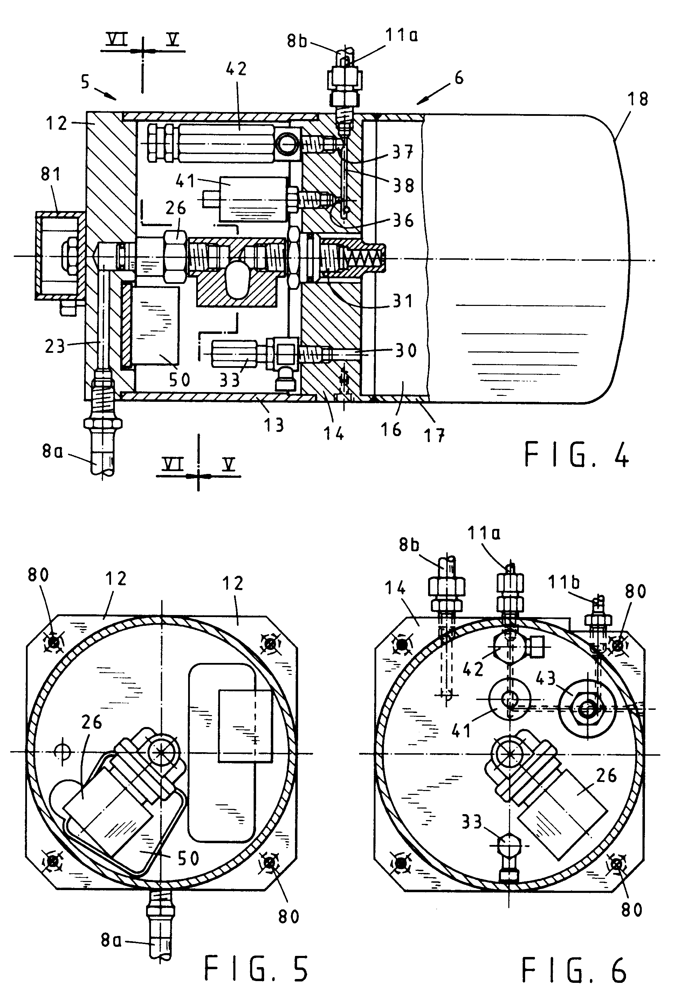

Die. Fig. 4, 5 und 6 zeigen das Sicherheitsaggregat 5 nach Fig. 1 in einer gegenständlichen Darstellung. Entsprechend dieser Darstellung sind die Stirnwand 12 und die Zwischenwand 14 über die zwischen sie dichtend eingesetzte Seitenwand 13 gegeneinander mittels Spannschrauben 80 verspannt. Die Seitenwand 17 und die Stirnwand 18 des Pufferraums 16 bilden einen kappenförmigen Teil, der an der Zwischenwand 14 angeschweisst ist. Das Einlassventil 26 ist in eine Bohrung der Stirnwand 12 eingeschraubt, die mit dem Strömungskanal 23 verbunden ist. Die Steuereinrichtung 50 und ein Klemmkasten 81 für die Anschlüsse der Signal- und Steuerleitungen sind an der Stirnwand 12 befestigt. Das Sicherheitsventil 43 und das Druckbegrenzungsventil 42 sind je in ein Bohrung der Zwischenwand 14 eingeschraubt. Das Rückschlagventil 31 ist in einer Bohrung der Zwischenwand 14 angeordnet und in eine Bohrung des Einlassventils 26 eingeschraubt.

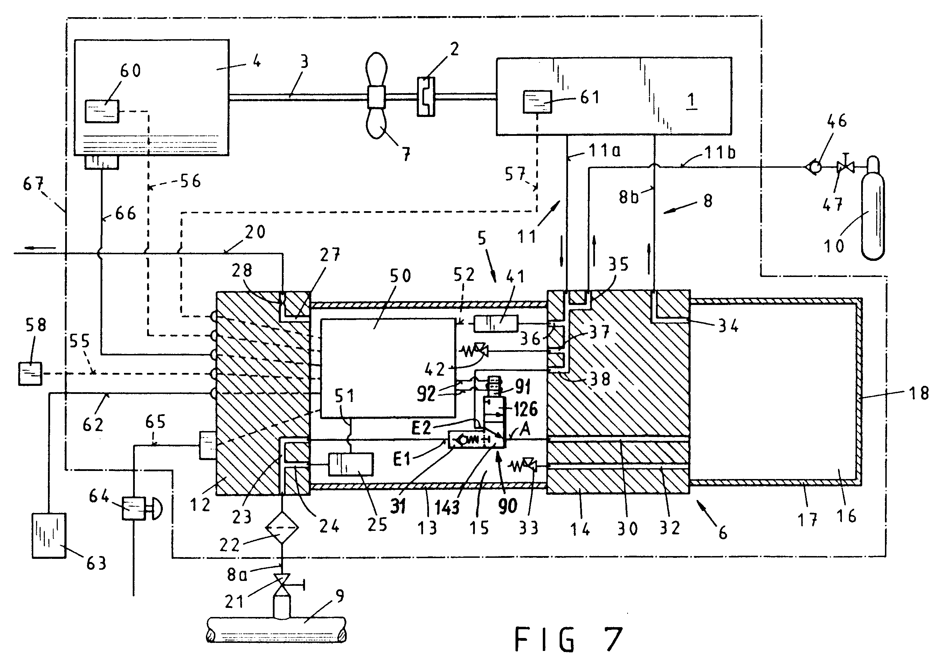

Bei den vorstehend beschriebenen Ausführungen sind das Einlassventil 26 der Saugleitung 8 und das Entlastungsventil 43 der Speiseleitung 11 über zwei voneinander unabhängig ansteuerbare Stellglieder beeinflussbar, wobei jeweils eines der beiden Ventile - das Einlassventil 26 oder das Entlastungsventil 43 - geöffnet ist, während das entsprechende andere Ventil geschlossen ist. Bei der in der Fig. 7 dargestellten Ausführung sind ein Einlassventil 126 und ein Entlastungsventil 143 durch ein gemeinsames Umschaltorgan 90 gebildet, welches über ein Stellglied 91 zwischen zwei Schaltstellungen verstellbar ist. Das Umschaltorgan 90, welches darstellungsgemäss als 3/2-Wegeventil ausgebildet sein kann, weist einen an den Strömungskanal 23 der Saugleitung 8 angeschlossenen ersten Eingang E1, einen an den Strömungskanal 38 der Speiseleitung 11 angeschlossenen zweiten Eingang E2 und einen an den Strömungskanal 30 der Saugleitung 8 angeschlossenen Ausgang A auf. In der einen, in der Fig. 7 nicht dargestellten Schaltstellung des Umschaltorgans 90 ist dessen erster Eingang E1 mit dem Ausgang A verbunden und der zweite Eingan E2 zwangsläufig abgesperrt, während in der anderen, in der Fig. 7 dargestellten Schaltstellung der zweite Eingang E2 mit dem Ausgang A verbunden und der erste Eingang E1 zwangsläufig abgesperrt ist.

Bei dieser Ausführung ist das Rückschlagventil 32 an der Eintrittsseite des Umschaltorgans 90 angeordnet. Das Rückschlagventil 32 kann als eigener, dem Umschaltorgan 90 vorschaltbarer Einbauteil ausgebildet oder, wie dargestellt, in das Umschaltorgan 90 integriert sein. Das Stellglied 91 des Umschaltorgans 90 ist über Steuerleitungen 92 mit der Steuereinrichtung 50 verbunden. Als Stellglied 91 kann ein Stellmotor oder, wie dargestellt, ein Elektrohubmagnet vorgesehen sein.

Ueber die in beschriebener Weise betätigbaren Schalteinrichtung 63 wird das Umschaltorgan 91 aus der dargestellten Schaltstellung in die den angeschlossenen Abschnitt der Speiseleitung 11 absperrende, den Strömungskanal 23 der Saugleitung 8 mit dem Strömungskanal 30 verbindende Schaltstellung verstellt und der Motor 4 über die Stromleitung 66 eingeschaltet. In entsprechender Weise wird - beim Erreichen des der Umgebungstemperatur entsprechenden betriebsmässigen Speisedrucks, oder wenn der Druck in der Speiseleitung 11 nach dem Einschalten des Kompressors 1 nicht ansteigt bzw. unter einen vorbestimmten Wert abfällt, - das Umschaltorgan 90 über die Steuereinrichtung 50 aus der die beiden Strömungskanäle 23 und 30 der Saugleitung 8 verbindenen Schaltstellung in die in der Fig. 7 dargestellte Schaltstellung verstellt, in welcher der Leitungsabschnitt 8a abgesperrt und der Abschnitt 11a der Speiseleitung 11 mit dem Strömungskanal 30 verbunden ist. Zugleich wird der Motor 4 abgeschaltet.

Durch das der Eintrittsseite des Umschaltorgans 90 zugeordnete Rückschlagventil 31 wird während des Verstellvorgangs ein Ueberströmen des unter dem Speisedruck stehenden Gasbrennstoffs aus der Speiseleitung 11 in den stromaufwärtigen Abschnitt 8a der Speiseleitung 8 verhindert. Bei der dargestellten, in das Gehäuse des Schaltorgans 90 integrierten Anordnung des Rückschlagventils 32 wird bereits innerhalb des Gehäuses ein Ueberströmen des Gasbrennstoffs vom zweiten Eingang E2 zum ersten Eingang E1 verhindert.

In der dargestellten Schaltstellung des Umschaltorgans 90 strömt die im Kompressor 1 und in der durch das Rückschlagventil 46 verschlossenen Speiseleitung 11 verbliebene, verdichtete Gasbrennstoffmenge durch den Strömungskanal 30 in den Pufferraum 16.

Bei der Ausführung nach Fig. 7 kann auf einfache Weise gewährleistet werden, dass bei geschlossenem Entlastungsventil 143 das Einlassventil 126 sicher geöffnet ist, wodurch insbesondere die Gefahr einer Luftansaugung durch den Kompressor 1 sicher vermieden wird.

**Patentansprüche**

1. Einrichtung zum Betanken eines Gasbrennstoffbehälters, mit einem zum Verdichten des Gasbrennstoffs bestimmten Kompressor (1), welcher saugseitig über eine mit einem absperrbaren Einlassventil (26, 126) versehene Saugleitung (8) an eine Quelle des Gasbrennstoffs, insbesondere eine Erdgasleitung (9), anschliessbar und druckseitig über eine Speiseleitung (11), die mit einem auf einen vorbestimmten Höchstdruck des verdichteten Gasbrennstoffs einstellbaren Druckbegrenzungsventil (42) und mit einem Entlastungsventil (43, 143) versehen ist, an den zu betankenden Gasbrennstoffbehälter (10) anschliessbar ist, dadurch gekennzeichnet, dass das Entlastungsventil (43, 143) und das Einlassventil (26, 126) an mindestens eine in Abhängigkeit von Steuersignalen eines die Umgebungstemperatur am Aufstellungsort der Einrichtung erfassenden Temperaturfühlers (58) und eines den Speisedruck des Kompressors (1) erfassenden Druckfühlers (41) beeinflussbare Steuereinrichtung (50) angeschlossen sind, dass ferner zumindest das Druckbegrenzungsventil (42) und das Entlastungsventil (43, 143) mit der Steuereinrichtung (50) in einem gegen die unmittelbare Umgebung abgedichteten Gehäuse (6) angeordnet sind, weiches an eine aus dem Anordnungsbereich der Einrichtung wegführende Abströmleitung (20) angeschlossen ist, und dass der mit der Quelle des Gasbrennstoffs verbindbare Abschnitt (8a) der Saugleitung (8) mit einem die Differenz zwischen dem in diesem Abschnitt (8a) herrschenden Druck des Gasbrennstoffs und dem im Gehäuse (6) herrschenden Druck erfassenden Druckdifferenzfühler (25) versehen ist, der an die Steuereinrichtung (50) angeschlossen ist.

2. Einrichtung nach Anspruch 1, dadurch gekennzeichnet, dass das Gehäuse (6) durch eine Zwischenwand (14) in einen das Druckbegrenzungsventil (42), das Entlastungsventil (43, 143) und die Steuereinrichtung (50) enthaltenden Armaturenraum (15) und einen gegen diesen abgedichteten Pufferraum (16) unterteilt ist, der mit der Austrittsseite des Einlassventils (26, 126) und mit einem zum Kompressor (1) führenden Abschnitt (8b) der Saugleitung (8) in Verbindung steht und der mit dem Armaturenraum (15) über eine in diesem angeordnetes, auf einen vorbestimmten Höchstdruck einstellbares Sicherheitsventil (33) verbindbar ist und der zugleich mit dem Ausgang des Entlastungsventils (43, 143) verbunden ist.

3. Einrichtung nach Anspruch 2, dadurch gekennzeichnet, dass die Zwischenwand (14) als mit Strömungskanälen (27, 30, 32, 34 - 38; 74, 75, 76) versehener Verteilblock ausgebildet ist, an den die Austrittsseite des Einlassventils (26, 126) angeschlossen ist, dass in einem Umfangsbereich der Zwischenwand (14) der zum Kompressor (1) führende Abschnitt (8a) der Saugleitung (8) und die mit dem Kompressor (1) und dem zu betankenden Gasbrennstoffbehälter (10) verbundenen Abschnitte (11a, 11b) der Speiseleitung (11) angeschlossen sind, und dass an der dem Armaturenraum (15) zugekehrten Seite der Zwischenwand (14) die Eintrittsseiten des Druckbegrenzungsventils (42), des Entlastungsventils (43, 143) und des Sicherheitsventils (33) sowie die Austrittsseite des Entlastungsventils (43, 143) angeschlossen sind, wobei die Austrittsseiten des Einlassventils (26, 126) und des Entlastungsventils (43, 143) sowie das Sicherheitsventil (33) und der mit dem Kompressor (1) verbundene Abschnitt (8b) der Saugleitung (8) je über einen der Strömungskanäle (30, 32, 34, 45) mit dem Pufferraum (16) in Verbindung stehen, während die mit dem Kompressor (1) und dem Gasbrennstoffbehälter (10) verbundenen Abschnitte (11a, 11b) der Speiseleitung (11) über entsprechende Strömungskanäle (35, 36, 37, 38) mit dem Druckfühler (41), dem Druckbegrenzungsventil (42) und der Eintrittsseite des Entlastungsventils (43, 143) in Verbindung stehen.

4. Einrichtung nach Anspruch 3, **dadurch ge-**

**kennzeichnet,** dass der Druckfühler (41) der Speiseleitung (11) im Armaturenraum (15) angeordnet und an den der Speiseleitung (11) zugeordneten Strömungskanal (36) angeschlossen ist.

5. Einrichtung nach Anspruch 3 oder 4, **dadurch gekennzeichnet,** dass das Einlassventil (26, 126) im Armaturenraum (15) angeordnet ist.

6. Einrichtung nach einem der vorangehenden Ansprüche, **dadurch gekennzeichnet,** dass das Einlassventil (126) und das Entlastungsventil (143) durch ein über ein einziges Stellglied (91) an die Steuereinrichtung (50) angeschlossenes, zwischen zwei Schaltstellungen verstellbares, gemeinsames Umschaltorgan (90) gebildet sind, welches einen an einen stromaufwärtigen Abschnitt (23) der Saugleitung (8) angeschlossenen ersten Eingang (E1), einen an die Speiseleitung (11) angeschlosssenen zweiten Eingang (E2) und einen an einen stromabwärtigen Abschnitt (30) der Saugleitung (8) angeschlossenen Ausgang (A) aufweist, wobei in der einen Schaltstellung des Umschaltorgans (90) dessen erster Eingang (E1) mit dem Ausgang (A) verbunden und der zweite Eingang (E2) abgesperrt ist, während in der anderen Schaltstellung der zweite Eingang (E2) mit dem Ausgang (A) verbunden und der erste Eingang (E1) abgesperrt ist.

7. Einrichtung nach Anspruch 6, **dadurch gekennzeichnet,** dass das Umschaltorgan (90) als 3/2-Wegeventil ausgebildet ist.

8. Einrichtung nach einem der Ansprüche 3 bis 7, **dadurch gekennzeichnet,** dass der der Saugleitung (8) zugeordnete Differenzdruckfühler (25) im Armaturenraum (15) angeordnet ist.

9. Einrichtung nach Anspruch 3 oder 4, **dadurch gekennzeichnet,** dass das Einlassventil (26) ausserhalb des Gehäuses (6) angeordnet und mit seiner Austrittsseite im Umfangsbereich der Zwischenwand (14) an den zugehörigen Strömungskanal (74) angeschlossen ist (Fig. 3).

10. Einrichtung nach einem der vorangehenden Ansprüche, **dadurch gekennzeichnet,** dass die Saugleitung (8) mit einem Rückschlagventil (31) versehen ist.

11. Einrichtung nach Anspruch 10, **dadurch gekennzeichnet,** dass das Rückschlagventil (31) an den mit der Austrittsseite des Einlassventils (26) verbundenen Strömungskanal (30; 74) angeschlossen ist.

12. Einrichtung nach den Ansprüchen 6 oder 7 und 10, **dadurch gekennzeichnet,** dass das Rückschlagventil (31) in dem an das Umschaltorgan (90) anschliessenden stromaufwärtigen Abschnitt (23) der Saugleitung (8) angeordnet ist.

13. Einrichtung nach Anspruch 12, **dadurch gekennzeichnet,** dass das Rückschlagventil (31) in das Umschaltorgan (90) integriert ist.

14. Einrichtung nach einem der Ansprüche 3 bis 13, **dadurch gekennzeichnet,** dass die aus dem Anordnungsbereich der Einrichtung wegführende Abströmleitung (20) über einen der in der Zwischenwand (14) ausgebildeten Strömungskanäle (27) an den Armaturenraum (15) angeschlossen ist (Fig. 2,3).

15. Einrichtung nach einem der Ansprüche 3 bis 13, **dadurch gekennzeichnet,** dass die aus dem Anordnungsbereich der Einrichtung wegführende Abströmleitung (20) an einen Strömungskanal (27) angeschlossen ist, der in einer im Abstand von der Zwischenwand (14) angeordneten Wandpartie (Stirnwand 12) des Gehäuses (6) ausgebildet und mit dem Armaturenraum (15) verbunden ist (Fig. 1, 7).

16. Einrichtung nach einem der vorangehenden Ansprüche, dadurch gekennzeichnet, dass der aus dem Anordnungsbereich der Einrichtung wegführenden Abströmleitung (20) eine Drosselstelle (28) zugeordnet ist (Fig. 2, 3).

17. Einrichtung nach einem der Ansprüche 3 bis 8, dadurch gekennzeichnet, dass die Eintrittsseite des Einlassventils (26, 126) an einen Strömungskanal (23) angeschlossen ist, weicher in einer im Abstand von der Zwischenwand (14) angeordneten Wandpartie (Stirnwand 12) des Gehäuses (6) ausgebildet ist und an welchen der mit der Quelle des Gasbrennstoffs verbindbare Abschnitt (8a) der Saugleitung angeschlossen ist (Fig. 1, 7).

18. Einrichtung nach einem der Ansprüche 3 bis 8, dadurch gekennzeichnet, dass die Eintrittsseite des Einlassventils (26, 126) an einen der in der Zwischenwand (14) ausgebildeten Strömungskanäle (70) angeschlossen ist und dass an diesen Strömungskanal (70) im Umfangsbereich der Zwischenwand (14) der mit der Quelle der Gasbrennstoffs verbindbare Abschnitt (8a) der Saugleitung (8) angeschlossen ist (Fig. 2).

## Claims

1. A device for filling a gaseous fuel tank, comprising a compressor (1) for compressing the gaseous fuel and adapted to be connected on the suction side, via a suction line (8) comprising an inlet shut-off valve (26, 126), to a source of gaseous fuel, more particularly a natural gas line (9), and adapted to be connected on the pressure side to the gaseous-fuel tank (10) to be filled, via a supply line (11) comprising a pressure-limiting valve (42) adjustable to a predetermined maximum pressure of the compressed gaseous fuel, and a relief valve (43, 143), characterised in that relief valve (43, 143) and the inlet valve (26, 126) are connected to at least one control device (50) adapted to be influenced in dependence on control signals from a temperature sensor (58) detecting the environmental temperature at the place where the device is installed and a pressure sensor (41) detecting the pressure at which the compressor (1) is supplied, at least the pressure-limiting valve (42) and the relief valve (43, 143) are disposed with the control device (50) in a casing (6) sealed from the immediate environment and connected to a discharge line (20) leading from the place where the device is disposed, and the portion (8a) of the suction line (8) connectable to the source of gaseous fuel comprises a pressure-difference sensor (25) detecting the difference between the gaseous-fuel pressure in said portion (8a) and the pressure in the casing (6), and connected to the control device (50).

2. A device according to claim 1, characterised in that the casing (6) is divided by a partition wall (14) into a fittings chamber (15) containing the pressure-limiting valve (42), the relief valve (43, 143) and the control device (50), and a buffer chamber (16) sealed from the fittings chamber and connected to the outlet side of the inlet valve (26, 126) and to a portion (8b) of the suction line (8) leading to the compressor (1), the buffer chamber being connectable to the fittings chamber (15) via a safety valve (33) disposed in the fittings chamber and adjustable to a preset maximum pressure, and also connected to the outlet of the relief valve (43, 143).

3. A device according to claim 2, characterised in that the partition (14) is a distribution block comprising flow channels (27, 30, 32, 34 - 38; 74, 75, 76), to which the outlet side of the inlet valve (26, 126) is connected, the portion (8a) of the suction line (8) leading to the compressor (1) and the portions (11a, 11b) of the supply line (11) connected to the compressor (1) and the gaseous-fuel tank (10) to be filled are connected in a peripheral region of the partition (14) and the inlet sides of the pressure-limiting valve (42), of the relief valve (43, 143) and of the safety valve (33) and the outlet side of the relief valve (43, 143) are connected to the side of the partition (14) facing the fittings chamber (15), the outlet sides of the inlet valve (26, 126) and of the disccharge valve (43, 143) and the safety valve (33) and the portion (8b) of the suction line (8) connected to the compressor (1) being connected via a respective one of the flow channels (30, 32, 34, 35) to the buffer chamber (16), and the portions (11a, 11b) of the supply line (11) connected to the compressor (1) and the gaseous-fuel tank (10) are connected via corresponding flow channels (35, 36, 37, 38) to the pressure sensor (41), the pressure-limiting valve (42) and the inlet side of the relief valve (43, 143).

4. A device according to claim 3, characterised in that the pressure sensor (41) of the supply line (11) is disposed in the fittings chamber (15) and is connected to the supply channel (36) associated with the supply line (11).

5. A device according to claim 3 or 4, characterised in that the inlet valve (26, 126) is disposed in the fittings chamber (15).

6. A device according to any of the preceding claims, characterised in that the inlet valve (126) and the relief valve (143) form a common change-over means (90) connected via a single actuator (19) to the control device (50) and adjustable between two switch positions, and having a first input (E1) connected to an upstream portion (23) of the suction line (8), a second input (E2) connected to the supply line (11) and an output (A) connected to a downstream portion (30) of the suction line (8), and in the first switching position of the change-over means (90) its first input (E1 is connected to the output (A) and its second input (E) is blocked, whereas in the other switching position the second input (E2) is connected to the output (A) and the first input (E1) is blocked.

7. A device according to claim 6, characterised in that the change-over means (90) is a three/two-way valve.

8. A device according to any of claims 3 to 7, characterised in that the pressure-difference sensor (25) associated with the suction line (8) is disposed in the fittings chamber (15).

9. A device according to claim 3 or 4, characterised in that the inlet valve (26) is disposed outside the casing (6) and its outlet side is connected to the associated flow channel (74) in the peripheral region of partition (14).

10. A device according to any of the preceding claims, characterised in that the suction line (8) comprises a non-return valve (31).

11. A device according to claim 10, characterised in that the non-return valve (31) is connected to the flow channel (30:74) connected to the outlet side of the inlet valve (26).

12. A device according to claim 6 or 7 and 10, characterised in that the non-return valve (31) is disposed in the upstream portion (23) of the suction line (8) adjacent the change over means (90).

13. A device according to claim 12, characterised in that the non-return valve (31) is incorporated in the change over means (90).

14. A device according to any of claims 3 to 13, characterised in that the discharge line (20) leading away from the place where the device is installed is connected to the fittings chamber (15) via one of the flow channels (27) formed in the partition (14) (Figs. 2, 3).

15. A device according to any of claims 3 to 13, characterised in that the discharge line (20) leading away from the place where the device is installed is connected to a flow channel (27) formed in a wall part (end wall 12) of the casing (6) at a distance from the partition (14) and connected to the fittings chamber (15) (Figs. 1,7).

16. A device according to any of the preceding claims, characterised in that a restrictor (28) is associated with the discharge line (20) leading away from the place where the device is installed (Figs. 2, 3).

17. A device according to any of claims 3 to 8, characterised in that the inlet side of the inlet valve (26, 126) is connected to a flow channel (23) formed in a wall part (end wall 12) of casing (6) disposed at a distance from partition (14) and connected to the portion (8a) of the suction line for connection to the source of gaseous fuel (Figs. 1, 7).

18. A device according to any of claims 3 to 8, characterised in that the inlet side of the inlet valve (26, 126) is connected to one of the flow channels (70) formed in the partition (14) and the portion (8a) of the suction line (8) for connecting to the source of gaseous fuel is connected to the flow channel (70) in the peripheral region of the partition (14) (Fig. 2).

## Revendications

1. Installation de ravitaillement d'une cuve de combustible ou carburant gazeux, comprenant un compresseur (1) destiné à la compression du combustible ou carburant gazeux et dont l'aspiration peut être raccordée par un conduit d'aspiration (8) équipé d'une vanne d'admission (26, 126) pouvant être fermée à une source du combustible ou carburant gazeux, en particulier à une canalisation de gaz naturel (9), tandis que son refoulement peut être raccordé à la cuve (10) devant être ravitaillée en combustible ou carburant gazeux au moyen d'un conduit d'alimentation (11) qui est équipé d'un limiteur de pression (42) réglable à un maximum prédéterminé de la pression du combustible ou carburant gazeux comprimé, ainsi que d'un détendeur (43, 143), caractérisée en ce que le détendeur (43, 143) et la vanne d'admission (26, 126) sont connectés à au moins un dispositif de commande (50) piloté en fonction de signaux de commande d'un capteur de température (58) détectant la température ambiante au lieu d'implantation de l'installation et d'un manomètre (41) détectant la pression d'alimentation du compresseur (1), en ce que par ailleurs au moins le limiteur de pression (42) et le détendeur (43, 143) sont disposés avec le dispositif de commande (50) dans une enceinte (6) fermée de manière hermétique vis-à-vis de l'environnement immédiat et raccordée à un conduit d'évacuation (20) débouchant à distance de la région dans laquelle se trouve l'installation et en ce que le tronçon (8a) du conduit d'aspiration (8) qui peut être raccordé à la source du combustible ou carburant gazeux est équipé d'un capteur (25) de différence de pression qui est connecté au dispositif de commande (50) et qui détecte la différence entre la pression du combustible gazeux régnant dans ce tronçon (8a) et la pression régnant dans l'enceinte (6).

2. Installation selon la revendication 1, caractérisée en ce que l'enceinte (6) est divisée par une cloison intermédiaire (14) en une chambre à robinetterie (15) contenant le limiteur de pression (42), le détendeur (43, 143) et le dispositif de commande (50) et en une chambre tampon (16) isolée de manière hermétique de la précédente, communiquant avec la sortie de la vanne d'admission (26, 126) et avec le tronçon (8b) du conduit d'aspiration (8) qui aboutit au compresseur (1) et pouvant être reliée à la chambre à robinetterie (15) par un clapet de sécurité (33) disposé dans cette dernière et réglable à une pression maximale prédéterminée, ladite chambre tampon communiquant également avec la sortie du détendeur (43, 143).

3. Installation selon la revendication 2, caractérisée en ce que la cloison intermédiaire (14) est conformée en bloc distributeur comportant des canaux de circulation (27, 30, 32, 34 - 38; 74, 75, 76) et auquel la sortie de la vanne d'admission (26, 126) est raccordée, en ce que le tronçon (8a) du conduit d'aspiration (8) qui mène au compresseur (1) et les tronçons (11a, 11b) du conduit d'alimentation (11) reliés au compresseur (1) et à la cuve (10) de combustible ou carburant gazeux devant être ravitaillée sont raccordés à la circonférence de la cloison intermédiaire (14), et en ce que les entrées du limiteur de pression (42), du détendeur (43, 143) et du clapet de sécurité (33) ainsi que la sortie du détendeur (43, 143) sont raccordées au côté de la cloison intermédiaire (14) qui est tourné vers la chambre à robinetterie (15), les sorties de la vanne d'admission (26, 126) et du détendeur (43, 143) ainsi que le clapet de sécurité (33) et le tronçon (8b) du conduit d'aspiration (8) qui est relié au compresseur (1) communiquant chacun par un canal de circulation (30, 32, 34, 45) avec la chambre tampon (16), tandis que les tronçons (11a, 11b) du conduit d'alimentation (11) qui sont reliés au compresseur (1) et à la cuve (10) de combustible ou carburant gazeux communiquent par des canaux correspondants de circulation (35, 36, 37, 38) avec le manomètre (41), le limiteur de pression (42) et l'entrée du détendeur (43, 143).

4. Installation selon la revendication 3, caractérisée en ce que le manomètre (41) du conduit d'alimentation (11) est disposé dans la chambre à robinetterie (15) et raccordé au canal de circulation (36) avec lequel communique le conduit d'alimentation (11).

5. Installation selon la revendication 3 ou 4, caractérisée en ce que la vanne d'admission (26, 126) est disposée dans la chambre à robinetterie (15).

6. Installation selon l'une des revendications précédentes, caractérisée en ce que la vanne d'admission (126) et le détendeur (143) sont formés d'un organe inverseur commun (90) déplaçable entre deux positions de fonctionnement et connecté par l'intermédiaire d'un unique régulateur (91) au dispositif de commande (50), ledit organe inverseur comprenant une première entrée (E1) raccordée à un tronçon amont (23) du conduit d'aspiration (8), une seconde entrée (E2) raccordée au conduit d'alimentation (11) et une sortie (A) raccordée à un tronçon aval (30) du conduit d'aspiration (8), la première entrée (E1) et la sortie (A) de l'organe inverseur (90) étant reliées et la seconde entrée (E2) de cet organe étant fermée lorsque ce dernier est à une première position de fonctionnement, tandis que, lorsqu'il est à l'autre position de fonctionnement, la seconde entrée (E2) est reliée à la sortie (A) et la première entrée (E1) est fermée.

7. Installation selon la revendication 6, caractérisée en ce que l'organe inverseur (90) est conformé en distributeur 3/2.

8. Installation selon l'une des revendications 3 à 7, caractérisée en ce que le capteur (25) de différence de pression qui est monté sur le conduit d'aspiration (8) est disposé dans la chambre à robinetterie (15).

9. Installation selon la revendication 3 ou 4, caractérisée en ce que la vanne d'admission (26) est disposée à l'extérieur de l'enceinte (6) et sa sortie est raccordée au canal correspondant de circulation (74) à la circonférence de la cloison intermédiaire (14) (Figure 3).

10. Installation selon l'une des revendications précédentes, caractérisée en ce que le conduit d'aspiration (8) est équipé d'un clapet de retenue (31).

11. Installation selon la revendication 10, caractérisée en ce que le clapet de retenue (31) est raccordé au canal de circulation (30; 74) relié à la sortie de la vanne d'admission (26).

12. Installation selon les revendications 6 ou 7 et 10, caractérisée en ce que le clapet de retenue (31) est disposé dans le tronçon amont (23) du conduit d'aspiration (8) qui se raccorde à l'organe inverseur (90).

13. Installation selon la revendication 12, caractérisée en ce que le clapet de retenue (31) est intégré dans l'organe inverseur (90).

14. Installation selon l'une des revendications 3 à 13, caractérisée en ce que le conduit d'évacuation (20) qui aboutit à distance de la région dans laquelle se trouve l'installation est raccordé à la chambre à robinetterie (15) au moyen de l'un (27) des canaux de circulation réalisés dans la cloison intermédiaire (14) (Figures 2, 3).

15. Installation selon l'une des revendications 3 à 13, caractérisée en ce que le conduit d'évacuation (20) débouchant à distance de la région dans laquelle se trouve l'installation est raccordé à un canal de circulation (27) qui est réalisé dans une partie de cloison (cloison extrême 12) de l'enceinte (6) qui est disposée à distance de la cloison intermédiaire (14), ce canal de circulation (27) étant relié à la chambre à robinetterie (15) (Figures 1, 7).

16. Installation selon l'une des revendications précédentes, caractérisée en ce que le conduit d'évacuation (20) aboutissant à distance de la région dans laquelle se trouve l'installation comprend un étranglement (28) (Figures 2, 3).

17. Installation selon l'une des revendications 3 à 8, caractérisée en ce que l'entrée de la vanne d'admission (26, 126) est raccordée à un canal de circulation (23) qui est réalisé dans une partie de cloison (cloison extrême 12) de l'enceinte (6) qui est disposée à distance de la cloison intermédiaire (14), le tronçon (8a) du conduit d'aspiration qui peut être relié à la source de combustible gazeux étant raccordé à ce canal de circulation (23) (Figures 1, 7).

18. Installation selon l'une des revendications 3 à 8, caractérisée en ce que l'entrée de la vanne d'admission (26, 126) est raccordée à un canal de circulation (70) réalisé dans la cloison intermédiaire (14) et en ce que le tronçon (8a) du conduit d'aspiration (8) qui peut être relié à la source de combustible gazeux est raccordé à ce canal de circulation (70) à la circonférence de la cloison (14) (Figure 2).

F I G. 1

FIG. 2

FIG. 3

FIG. 4

FIG. 5

FIG. 6

14

FIG 7

EP 0 300 222 B1